# EUROPEAN PATENT APPLICATION

(11) **EP 4 832 131 A1**
(43) Date of publication of application: **28.10.2026**
(21) Application number: 26174486.6
(22) Date of filing: 24.04.2026
(51) Int. Cl.: H01M 10/0525, H01M 4/58, H01M 4/133, H01M 4/136, H01M 4/587, H01M 4/02

(54) **LITHIUM-ION BATTERY**

(30) Priority: 24.04.2025 CN 202510525666
(71) Applicant: Zhejiang Cosmx Battery Co., Ltd., Jiaxing City, Zhejiang 314300 (CN)
(72) Inventor: XIANG, Xingjiang, Jiaxing City, 314300 (CN); XIE, Xia, Jiaxing City, 314300 (CN); GAO, Zhi, Jiaxing City, 314300 (CN); CHEN, Yao, Jiaxing City, 314300 (CN)
(74) Representative: Murgitroyd & Company

(57) **Abstract**

Disclosed is a lithium-ion battery. The battery includes a positive electrode plate and a negative electrode plate. The lithium iron phosphate material (LFP) in the positive electrode plate is a blend of small and large particles with different particle sizes. The negative electrode plate features a dual-layer coating design, where the first graphite particles with a small particle size are used in the upper layer, and the second graphite particles with a large particle size are used in the lower layer. The combination of the positive electrode plate and the dual-layer coated negative electrode plate enables the lithium-ion battery to have a higher energy density and good fast-charging performance, rate performance, and high-temperature storage performance.

## Description

### TECHNICAL FIELD

The present invention relates to the technical field of lithium batteries, in particular to a lithium-ion battery.

### BACKGROUND

A lithium-ion battery is primarily composed of a positive electrode material, a negative electrode material, a separator, an electrolyte, and auxiliary materials. Among these, the positive electrode material accounts for 30% or more of the total cost. Up to now, the batteries applied in electric vehicles are mainly ternary batteries and lithium iron phosphate batteries. Owing to its unique olivine structure, as well as its possession of strong P-O bonds, lithium iron phosphate has a very stable structure and thus exhibits characteristics such as high safety and long cycle life, earning it broad attention and extensive application. Lithium iron phosphate positive electrode materials are widely adopted in battery electric vehicles (BEVs) and the energy storage field due to their characteristics such as high safety, long cycle life, and eco-friendly nature. With the further application of lithium iron phosphate in the field of BEVs, meeting the demands for extended driving range and fast charging has increasingly become a mainstream requirement.

However, the relatively low energy density and limited fast-charging performance of lithium iron phosphate have led to "range anxiety' in electric vehicle applications. To ensure not only rapid charging performance but also a high energy density and extended driving range of batteries, existing designs for lithium iron phosphate batteries aim to enhance energy density by means of thick electrode preparation and high compaction. However, as the areal density of the electrode coating and the compacted density increase, the ion transport kinetics of the battery will drop drastically, affecting the overall performance of lithium iron phosphate batteries. Based on this, it is crucial to develop a battery that exhibits high energy density, good fast-charge cycling performance, and excellent rate performance.

### SUMMARY

An object of the present invention is to provide a lithium-ion battery in order to overcome the above problems existing in the prior art. The lithium iron phosphate material (LFP) in the positive electrode plate is a blend of small and large particles with different particle sizes. The negative electrode plate features a dual-layer coating design, where the first graphite particles with a small particle size are used in the upper layer, and the second graphite particles with a large particle size are used in the lower layer. The combination of the positive electrode plate and the dual-layer coated negative electrode plate enables the lithium-ion battery to have a higher energy density and good fast-charging performance, rate performance, and high-temperature storage performance.

To achieve the object described above, the present invention provides a battery, which includes a positive electrode plate and a negative electrode plate, where
the positive electrode plate includes a positive electrode current collector, and a positive electrode active material layer provided on a surface on at least one side of the positive electrode current collector; the positive electrode active material layer includes a lithium iron phosphate material; the lithium iron phosphate material includes first lithium iron phosphate particles and second lithium iron phosphate particles; the first lithium iron phosphate particles have a particle size of 50 nm-500 nm; the second lithium iron phosphate particles have a particle size of 500 nm-5000 nm;
in the positive electrode active material layer, the percentage by number of the first lithium iron phosphate particles is 70%-95%, and the percentage by number of the second lithium iron phosphate particles is 5%-30%;
the negative electrode plate includes a negative electrode current collector, and a negative electrode active material layer provided on a surface on at least one side of the negative electrode current collector; the negative electrode active material layer includes a first negative electrode active material layer and a second negative electrode active material layer, and the second negative electrode active material layer is provided between the negative electrode current collector and the first negative electrode active material layer; the first negative electrode active material layer includes first graphite particles, and the second negative electrode active material layer includes second graphite particles; and the Dv50 of the first graphite particles < the Dv50 of the second graphite particles.

In the present invention, the technical solutions described above are used and have the following beneficial effects:
In the lithium-ion battery provided by the present invention, the lithium iron phosphate material (LFP) in the positive electrode plate is a blend of small and large particles with different particle sizes. The first lithium iron phosphate particles with a smaller particle size can improve the fast-charging performance of the lithium-ion battery; and the second lithium iron phosphate particles with a larger particle size can improve the compacted density of the positive electrode plate, thus enabling the lithium-ion battery to have good high-temperature storage and cycling performance. Simultaneously, the negative electrode plate features a dual-layer coating design. The first graphite particles with a small particle size are used in the upper layer, which can improve the rate performance of the battery and enhance the fast-charging and cycling performance of the lithium-ion battery. The second graphite particles with a larger particle size are used in the lower layer, allowing for optimized high-temperature storage and cycling performance. The combination of the positive electrode plate and the dual-layer coated negative electrode plate enables the lithium-ion battery to have a higher energy density and good fast-charging performance, rate performance, and high-temperature storage performance.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein. In the present invention, unless otherwise specified, all the numerical ranges are inclusive of the endpoints.

### BRIEF DESCRIPTION OF THE DRAWINGS

FIG. 1 shows an SEM image showing the morphology of the lithium iron phosphate material prepared in Example 1.
FIG. 2 shows a structural schematic diagram of the positive electrode coating of the positive electrode plate in Example 1.
FIG. 3 shows an SEM image of the positive electrode plate in Example 1.
FIG. 4 shows an SEM micrograph of the plasma-cut cross-section of the positive electrode plate in Example 1.
FIG. 5 shows a structural schematic diagram of the dual-layer coating of the negative electrode plate in Example 1.
FIG. 6 shows an SEM image of the positive electrode plate in Example 2c.
FIG. 7 shows an SEM image of the positive electrode plate in Comparative example 2d.

### DETAILED DESCRIPTIONS OF THE EMBODIMENTS

Hereinafter, specific embodiments of the present invention will be described in detail. It should be understood that the specific embodiments described herein are only used to illustrate and explain the present invention and are not used to limit the present invention.

Unless otherwise defined, all scientific and technical terms used in the present invention have the same meanings as commonly understood by those skilled in the technical field to which the present invention relates.

In the present invention, the terms "lithium-ion battery", "battery", "lithium battery", and "lithium-ion secondary battery" all have the same meaning and refer to a lithium-ion secondary battery, generally including an electrode assembly (e.g., a positive electrode plate, a negative electrode plate, and a separator), a container (housing) for accommodating the electrode assembly, and an electrolyte.

The present invention provides a lithium-ion battery. The battery includes a positive electrode plate and a negative electrode plate;
the positive electrode plate includes a positive electrode current collector, and a positive electrode active material layer provided on a surface on at least one side of the positive electrode current collector; the positive electrode active material layer includes a lithium iron phosphate material; the lithium iron phosphate material includes first lithium iron phosphate particles and second lithium iron phosphate particles; the first lithium iron phosphate particles have a particle size of 50 nm-500 nm; the second lithium iron phosphate particles have a particle size of 500 nm-5000 nm;
in the positive electrode active material layer, the percentage by number of the first lithium iron phosphate particles is 70%-95%, and the percentage by number of the second lithium iron phosphate particles is 5%-30%;
the negative electrode plate includes a negative electrode current collector, and a negative electrode active material layer provided on a surface on at least one side of the negative electrode current collector; the negative electrode active material layer includes a first negative electrode active material layer and a second negative electrode active material layer, and the second negative electrode active material layer is provided between the negative electrode current collector and the first negative electrode active material layer; the first negative electrode active material layer includes first graphite particles, and the second negative electrode active material layer includes second graphite particles; and the Dv50 of the first graphite particles < the Dv50 of the second graphite particles.

In the lithium-ion battery provided by the present invention, the lithium iron phosphate material (LFP) in the positive electrode plate is a blend of small and large particles with different particle sizes. The first lithium iron phosphate particles with a smaller particle size can provide more reaction sites and improve the kinetics of the positive electrode plate, thereby improving the fast-charging performance of the lithium-ion battery. The second lithium iron phosphate particles with a larger particle size can provide a compaction basis, and the lithium iron phosphate particles with a smaller particle size are filled in the gaps between the lithium iron phosphate particles with a larger particle size, resulting in a higher theoretical bulk density, thus improving the compacted density of the positive electrode plate. Therefore, the lithium-ion battery has good high-temperature storage and cycling performance. In the negative electrode plate, the first graphite particles with a smaller particle size are used in the first negative electrode active material layer (also referred to as the upper layer) away from the negative electrode current collector. The first graphite particles have a high density of surface defect sites, which leads to a higher concentration of active ions in the upper region of the negative electrode plate, thereby improving the rate performance of the battery. Furthermore, the large specific surface area of the first graphite particles can provide more channels for active ion intercalation and de-intercalation, which can better improve the fast-charging and cycling performance of the lithium-ion battery. The second graphite particles with a larger particle size are used in the second negative electrode active material layer (also referred to as the lower layer) close to the negative electrode current collector, allowing for less side reactions, and better high-temperature storage and cycling performance. The combination of the positive electrode plate and the dual-layer coated negative electrode plate enables the lithium-ion battery to have a higher energy density and good fast-charging performance, rate performance, and high-temperature storage performance.

In some embodiments, the particle size of the first lithium iron phosphate particles is any value in the range of 50 nm-500 nm, and may be, for example, any point value in the ranges of 50 nm-100 nm, 100 nm-200 nm, 200 nm-300 nm, 300 nm-400 nm, and 400 nm-500 nm; and the particle size of the second lithium iron phosphate particles is any value in the range of 500 nm-5000 nm, and may be, for example, any point value in the ranges of 500 nm-1000 nm, 1000 nm-2000 nm, 2000 nm-3000 nm, 3000 nm-4000 nm, and 4000 nm-5000 nm. The lithium iron phosphate material is composed of a combination of first lithium iron phosphate particles and second lithium iron phosphate particles, the two types having different particle sizes from each other. When the particle sizes of the first lithium iron phosphate particles and the second lithium iron phosphate particles fall within the ranges mentioned above, a higher bulk density is achieved, which not only can improve the compacted density of the positive electrode plate but also enables the positive electrode plate to exhibits rapid lithium intercalation and de-intercalation, thereby allowing the lithium-ion battery to have a high energy density and fast-charging performance.

In some embodiments, in the positive electrode active material layer, the percentage by number of the first lithium iron phosphate particles is 70%-95%, and the percentage by number of the second lithium iron phosphate particles is 5%-30%. The percentage by number of the first lithium iron phosphate particles may be, for example, 70%, 72%, 75%, 78%, 80%, 82%, 85%, 88%, 90%, 92%, 95%, or any point value in a range consisting of two of the above point values, preferably 80%-90%; and the percentage by number of the second lithium iron phosphate particles may be, for example, 5%, 6%, 8%, 10%, 12%, 15%, 18%, 20%, 22%, 25%, 28%, 30%, or any point value in a range consisting of two of the above point values, preferably 10%-20%. In the present invention, controlling the percentage by number of the first lithium iron phosphate particles and the second lithium iron phosphate particles in the ranges mentioned above can avoid problems of deteriorated kinetics and reduced constant-current charge ratio caused by the addition of excessive second lithium iron phosphate particles (with a large particle size). Since the second lithium iron phosphate particles have a large particle size, the path for lithium intercalation and de-intercalation becomes longer. Given that lithium ions within the lithium iron phosphate lattice diffuse primarily along the 010-B axis direction, an excessive amount of the second lithium iron phosphate particles tend to lead to deteriorated kinetics of the positive electrode active material and a reduction in the constant-current charge ratio. Furthermore, this can avoid problems of poor cycling performance, poor high-temperature storage performance, and low energy density caused by adding an insufficient amount of the first lithium iron phosphate particles (with a small particle size). Since the first lithium iron phosphate particles have a small particle size, the lithium intercalation and de-intercalation paths are shorter, resulting in enhanced kinetic performance. However, an excessive amount of the first lithium iron phosphate particles leads to a high specific surface area, which increases the reaction activity during the charge/discharge processes and triggers more side reactions, thereby significantly impacting cycling performance and high-temperature storage performance. Furthermore, the lower bulk density of small particles results in a lower capacity per unit volume, reducing the energy density of the battery.

The method for determining the particle size and percentage by number of the first lithium iron phosphate particles and the second lithium iron phosphate particles may be as follows: for example, a specific unit area of 10 µm × 10 µm of the positive electrode plate is randomly selected within the field of view under a scanning electron microscope (SEM); the particle sizes of all lithium iron phosphate particles within this unit area are statistically measured; the percentage by number of the first and second lithium iron phosphate particles are then determined by categorizing their respective particle size ranges.

In some embodiments, the percentage by number of the lithium iron phosphate particles having a particle size of 1000 nm-5000 nm in the positive electrode active material layer is < 3%, and the percentage by number may be, for example, 0.5%, 1%, 2%, 2.5%, 2.8%, 2.99%, or any point value in a range consisting of two of the above point values, preferably 1.2%-3% (excluding the 3% endpoint). When the lithium iron phosphate particles with varying particle sizes are blended at different percentages by number in the positive electrode plate, further controlling the percentage by number of the lithium iron phosphate particles with a particle size of 1000 nm-5000 nm (ultra-large lithium iron phosphate particles) within the ranges described above can control the number of the ultra-large lithium iron phosphate particles within a lower range, thus shortening the transport paths of lithium ions, reducing the transport time of lithium ions during the charging and discharging process, mitigating charge-discharge polarization, improving battery kinetics, and thereby further improving the fast-charging performance of the battery.

In some embodiments, the lithium iron phosphate material has a particle size satisfying: 0.9 ≤ (Dn90-Dn10)/Dn50 ≤ 1.2. The value of (Dn90-Dn10)/Dn50 may be, for example, 0.9, 0.93, 0.95, 1.0, 1.05, 1.08, 1.1, 1.12, 1.15, 1.18, 1.2, or any point value in a range consisting of two of the above point values.

The Dn-series parameters are statistical particle size indicators based on number distribution of the particles and are used to quantify the central tendency and distribution width of particle populations (the size and distribution of the lithium iron phosphate particles are observed and recorded by means of scanning electron microscopy (SEM) to obtain the statistical plots of the number distribution of the lithium iron phosphate particles). Dn10 definition: 10% of the particles of the lithium iron phosphate material have a diameter less than or equal to this value (i.e., the upper limit of the particle size of the smallest 10% of the lithium iron phosphate particle population). Dn50 (median particle size) definition: 50% of the particles have a diameter less than or equal to this value, i.e., the median particle size by number of the lithium iron phosphate particle population. Dn90 definition: 90% of the particles have a diameter less than or equal to this value (i.e., the lower limit of the particle size of the largest 10% of the lithium iron phosphate particle population).

The value of (Dn90-Dn10)/Dn50 represents the distribution width ratio of the lithium iron phosphate particles. The higher the value, the broader the distribution. A broader distribution indicates a more significant particle size difference between the first lithium iron phosphate particles and the second lithium iron phosphate particles. The first lithium iron phosphate particles and the second lithium iron phosphate particles experience different degrees of stress during the charging and discharging process, which will cause increased battery polarization. When the value of (Dn90-Dn10)/Dn50 is controlled within the ranges described above, the distribution width ratio of the lithium iron phosphate material in the positive electrode plate is reduced. This mitigates battery polarization and enhances battery kinetics, thereby further improving the fast-charging performance of the battery.

In some embodiments, the lithium iron phosphate material has a Dn50 of 300 nm-400 nm. The Dn50 of the lithium iron phosphate material may be, for example, 300 nm, 310 nm, 320 nm, 330 nm, 340 nm, 350 nm, 360 nm, 370 nm, 380 nm, 390 nm, 400 nm, or any point value in a range consisting of two of the above point values.

It should be noted that the Dn50 of the lithium iron phosphate material refers to the median particle size of the lithium iron phosphate material obtained from the combination of the first lithium iron phosphate particles and the second lithium iron phosphate particles. This value can be obtained from the plots of the number distribution of the lithium iron phosphate particles.

In the positive electrode plate, by using a blend of lithium iron phosphate particles with different particles sizes at different percentages by number, and further adjusting the median particle size of the lithium iron phosphate particles within the ranges described above, the resulting lithium iron phosphate particle blend has a relatively small (primarily at the nanoscale) particle size, resulting in shorter lithium intercalation and de-intercalation paths and enhanced kinetic performance. These fully nanosized lithium iron phosphate particles can ensure that the battery has good fast-charging performance, thereby alleviating range anxiety.

In some embodiments, the lithium iron phosphate material is doped with one or more of Ti, V, Mg, or Al elements.

Further investigation in the present invention has found that by adding some metal oxides (e.g., metal oxides containing one or more of Ti, V, Mg, or Al elements) during the milling stage when preparing the lithium iron phosphate material, and doping metals in a higher valence state into LFP by sintering, the doped metal elements often possess valence states similar to or higher than that of iron, with a greater electron cloud density, which can effectively elevate the voltage plateau of the lithium iron phosphate material. Furthermore, the doping primarily targets Fe vacancies and others, which strengthens the bond energy with O. This, in turn, reduces the binding effect of the surrounding oxygen on Li, thereby increasing the lithium diffusion coefficient. Doping with the metal elements mentioned above also can stabilize the structure of the lithium iron phosphate material and inhibit the abnormal growth of the lithium iron phosphate crystal grains during the sintering process. However, the doping amount needs to be controlled; excessive doping hinders the growth of lithium iron phosphate particles during sintering, thereby affecting the capacity utilization per gram of the final product.

The methods for determining the content of doped metal elements in the lithium iron phosphate material include: the content of the doped metal elements is determined via inductively coupled plasma (ICP).

To further improve the structural stability and capacity utilization of the lithium iron phosphate material prepared from blended small and large particles, the present invention further proposes a technical solution of doping lithium iron phosphate particles of varying particle sizes with different metal elements, as described below:
In some embodiments, the first lithium iron phosphate particles are doped with Ti element, and the content of the Ti element is 0 ppm-3000 ppm, and may be, for example, 0 ppm, 10 ppm, 100 ppm, 500 ppm, 800 ppm, 1000 ppm, 1500 ppm, 2000 ppm, 2500 ppm, 3000 ppm, or any point value in a range consisting of two of the above point values, more preferably 500 ppm-2800 ppm. The first lithium iron phosphate particles are doped with the Ti element. Ti is beneficial for further grain refinement. By occupying Fe sites, Ti exerts a stronger binding effect on O, which enhances the structural stability of the lithium iron phosphate material and suppresses the further growth of crystals. This allows the first lithium iron phosphate particles to reach a smaller grain level while simultaneously shortening ion transport paths, thereby further improving the rate performance of the battery.

In some embodiments, the second lithium iron phosphate particles are doped with V element, and the content of the V element is ≤ 5000 ppm, and may be, for example, 10 ppm, 100 ppm, 500 ppm, 800 ppm, 1000 ppm, 1500 ppm, 2000 ppm, 2500 ppm, 3000 ppm, 3500 ppm, 4000 ppm, 4500 ppm, 5000 ppm, or any point value in a range consisting of two of the above point values, more preferably 3000 ppm-5000 ppm. The doping of V acts as N-type doping with a higher chemical valences and greater electron cloud density, which can more effectively elevate the voltage plateau of the lithium iron phosphate material. At the same time, an overly high V element content should be avoided to prevent increased internal thermal stress of the positive electrode plate and the subsequent deterioration of the high-temperature performance of the battery.

In some embodiments, the lithium iron phosphate material or the positive electrode plate satisfies at least one of the following conditions:
(a) the lithium iron phosphate material has a powder compacted density of 2.6 g/cm³-2.9 g/cm³;
(b) the lithium iron phosphate material has a powder resistivity of 5 Ω.cm-10 Ω.cm;
(c) in the lithium iron phosphate material, the content of impurities is < 150 ppm, and the content of magnetic substances is < 1 ppm;
(d) the positive electrode plate has a compacted density of ≥ 2.75 g/cc; or
(e) the positive electrode plate has an area resistance of 5 Ω.cm²-15 Ω.cm².

In (a), the powder compacted density of the lithium iron phosphate material may be, for example, 2.6 g/cm³, 2.65 g/cm³, 2.7 g/cm³, 2.75 g/cm³, 2.8 g/cm³, 2.85 g/cm³, 2.9 g/cm³, or any point value in a range consisting of two of the above point values. The lithium iron phosphate material in the positive electrode plate of the present invention is a blend of small and large particles with different particle sizes, which improves the powder compacted density of the lithium iron phosphate material, thereby further improving the energy density of the battery.

The method for determining the powder compacted density of the lithium iron phosphate material includes: using a SUNS powder compacted density tester, under a pressure of 3 T.

In (b), the powder resistivity of the lithium iron phosphate material may be, for example, 5 Ω.cm, 6 Ω.cm, 7 Ω.cm, 8 Ω.cm, 9 Ω.cm, 10 Ω.cm, or any point value in a range consisting of two of the above point values. The lithium iron phosphate material in the positive electrode plate of the present invention is a blend of small and large particles with different particle sizes. Small particles fill the voids between large particles, resulting in a denser packing of the entire lithium iron phosphate material system. This helps reduce the contact resistance between the lithium iron phosphate particles and enhances the charge transport efficiency between the lithium iron phosphate particles, thereby lowering the overall powder resistivity of lithium iron phosphate and improving the rate performance of the battery.

The method for determining the powder resistivity of the lithium iron phosphate material includes: the powder resistivity under 50 mpa is measured using a four-probe powder resistivity tester.

In (c), in the lithium iron phosphate material, the content of impurities is < 150 ppm, and the content of magnetic substances is < 1 ppm. The presence of the impurities and magnetic substances in the lithium iron phosphate material can accelerate structural degradation of the battery material, thereby affecting the cycling stability of the battery. Controlling the content of impurities to be < 150 ppm and controlling the content of magnetic substances to be < 1 ppm can significantly mitigate the destructive effects of these harmful substances on the lithium iron phosphate material, thereby enhancing the structural stability of the positive electrode plate and prolonging the cycle life of the battery.

The content of impurities in the lithium iron phosphate material can be determined via ICP; and the magnetic substance content can be determined using magnetic bar adsorption + ICP.

In (d), the compacted density of the positive electrode plate is ≥ 2.75 g/cc. The lithium iron phosphate material in the positive electrode plate is a blend of small and large particles with different particle sizes, resulting in a denser packing of the entire lithium iron phosphate material system and a higher compacted density. This allows the positive electrode plate to have a compacted density of ≥ 2.75 g/cc, thereby further improving the energy density of the battery.

The compacted density of the positive electrode plate is determined as follows: first, a disc is punched out using a disc cutter, and the area of the disc is calculated based on the diameter thereof; the thickness of the disc is measured with a ten-thousandth micrometer to calculate the volume of the coatings on both sides (the calculation of the coating thickness should subtract the foil thickness); then the weight of the disc is weighed using an electronic balance; and finally, the compacted density (in g/cm³) is calculated as the ratio of the mass to volume.

In (e), the area resistance of the positive electrode plate may be, for example, 5 Ω.cm², 6 Ω.cm², 7 Ω.cm², 8 Ω.cm², 9 Ω.cm², 10 Ω.cm², 11 Ω.cm², 12 Ω.cm², 13 Ω.cm², 14 Ω.cm², 15 Ω.cm², or any point value in a range consisting of two of the above point values. The high compacted density of the positive electrode plate ensures closer contact between the electrode materials, which reduces the contact resistance between the lithium iron phosphate particles. This, in turn, lowers the area resistance of the positive electrode plate, which is conducive to improving the power output of the battery and enables the battery to provide a larger current during high-rate charging and discharging, thereby enhancing the rate performance of the battery.

The area resistance of the positive electrode plate can be measured using a resistance tester.

The present invention further provides a preparation method for a lithium iron phosphate material, which includes the following steps:
(1) adding iron phosphate to an organic carbon source, a coating agent, a lithium source, a dopant, a dispersant, and ultrapure water, with an addition amount of the doping element when the mixture is milled into small particles (50 nm-500 nm) being 0-3000 ppm; and an addition amount of the doping element when the mixture is milled into large particles (500-5000 nm) being 3000-5000 ppm; and separately milling the prepared mixtures;
(2) spray-drying the milled slurries, respectively, to obtain spray-dried materials with a moisture content of less than 3%;
(3) placing the spray-dried material with a particle size of 50-500 nm in a roller kiln and sintering same in the roller kiln under a nitrogen-filled reducing atmosphere for 15-30 h, where the calcination temperature is 720-740°C;
(4) placing the spray-dried material with a particle size of 500-5000 nm in a roller kiln and sintering same in the roller kiln under a nitrogen-filled reducing atmosphere for 18-30 h, where the calcination temperature is 780-810°C;
(5) jet-milling the sintered materials from steps (3) and (4), respectively, to obtain the pulverized materials;
(6) mixing the two pulverized materials and loading same into a saggar for secondary sintering, with the small and large particles mixed at a weight ratio of 1:9 - 2:8;
(7) weighing 5-7 kg of the mixed material, placing same into a refractory graphite saggar and sintering same in the roller kiln under a nitrogen-filled reducing atmosphere for 15-30 h, with an oxygen content < 20 ppm, where the calcination temperature is 750-780°C;
(8) jet milling the mixed and sintered material; and subjecting the pulverized material to sieving, iron removal, and packaging to obtain highly-compacted, fast-charging lithium iron phosphate, where during jet-milling, the dew point in the milling chamber is controlled to -60°C; and the packaging is carried out in a temperature-constant, low-humidity room at 25°C±2°C with a relative humidity of 15% RH or less, using vacuum packaging to maintain the moisture content of the finished product at 1000 ppm or less.

In some embodiments, the organic carbon source includes glucose. The coating agent includes PEG6000, which serves the function of providing carbon coating and surface-active dispersion. The lithium source includes lithium carbonate. The dopant is selected based on the elements doped, including, for example, TiO₂ (for Ti element doping), and ammonium metavanadate and vanadium oxide (for V element doping). The dispersant includes citric acid.

In the lithium iron phosphate particles prepared using the method described above, based on the number of the particles, the first lithium iron phosphate particles with a particle size in the range of 100-500 nm (small particles) account for 80-90%; and the second lithium iron phosphate particles with a particle size of 500-5000 nm (large particles) account for 10-20%. Particularly, the percentage by number of the lithium iron phosphate particles with a particle size of 1-5 µm is < 3%; the large particles (500-5000 nm) and small particles (50-500 nm) are mixed in a quantity ratio of 2 : 8 or 1 : 9, to obtain particle-size-graded lithium iron phosphate with a Dn50 in the range of 0.3-0.4 µm, a (Dn90-Dn10)/Dn50 in the range of 0.9-1.2, and a large-to-small particle mass ratio of 9 : 1. The doping amount for the large particles (500-5000 nm) is 3000-5000 ppm; and the doping amount for the small particles (100-500 nm) is 0-3000 ppm.

In some embodiments, the positive electrode active material layer includes a lithium iron phosphate material (including first lithium iron phosphate particles and second lithium iron phosphate particles), a positive electrode binder, and a positive electrode conductive agent. Based on the total mass of the positive electrode active material layer, the mass percentage of the lithium iron phosphate material is 96.5%-98%, the mass percentage of the binder is 1.5-2.5%, and the mass percentage of the conductive agent is 1%-2%.

The positive electrode binder and the positive electrode conductive agent include those commonly used in the art. The positive electrode binder includes, but is not limited to, polyvinylidene fluoride (PVDF), polytetrafluoroethylene, polyethylene oxide, sodium carboxymethylcellulose, styrene-butadiene rubber (SBR), etc., preferably polyvinylidene fluoride. The positive electrode conductive agent includes, but is not limited to, one or more (a mixed conductive agent) of carbon black, carbon nanotubes, graphene, and carbon fiber, preferably carbon black.

In some embodiments, the positive electrode current collector includes a metallic aluminum foil or a carbon-coated metallic aluminum foil including a metallic aluminum foil and carbon black, preferably carbon-coated metallic aluminum foil.

The negative electrode plate of the present invention features a dual-layer coating design, where first graphite particles with a small particle size are used in the upper layer, and the second graphite particles with a large particle size are used in the lower layer, such that the fast-charging and cycling performance, and high-temperature storage performance of the lithium-ion battery are improved.

In order to further optimize the electrochemical performance of the negative electrode plate, the present invention further proposes the following technical solution:
In some embodiments, the Dv50 of the first graphite particles is 5 µm-15 µm, and may be, for example, 5 µm, 8 µm, 10 µm, 12 µm, 15 µm, or any point value in a range consisting of two of the above point values; and/or, the Dv50 of the second graphite particles is 10 µm-30 µm, and may be, for example, 10 µm, 15 µm, 20 µm, 25 µm, 30 µm, or any point value in a range consisting of two of the above point values. When the negative electrode plate is designed with a dual-layer coating, further adjusting the Dv50 of the first graphite particles and the Dv50 of the second graphite particles to meet the above-mentioned ranges can shorten the diffusion path of lithium ions in the negative electrode plate and accelerate the transport speed of lithium ions, thereby improving the rate performance of the battery.

The particle size Dv50 of the first graphite particles and the second graphite particles can be measured by laser particle size analysis using a Mastersizer 3000 instrument.

In some embodiments, with the difference between the Dv90 and Dv10 of the first graphite particles being denoted as A, and the difference between the Dv90 and Dv10 of the second graphite particles being denoted as B, A and B satisfy: A < B. The difference between the Dv90 and Dv10 of the graphite material represents the particle size distribution width of the graphite particles. The larger the difference, the wider the particle distribution, the more the graphite particles with a large particle size, and the greater the compacted density and energy density. The difference A between the Dv90 and Dv10 of the first graphite particles in the upper layer of the negative electrode plate is adjusted to be smaller, i.e., graphite particles with a smaller particle size are used; and the difference B between the Dv90 and Dv10 of the second graphite particles in the lower layer of the negative electrode plate is adjusted to be greater, i.e., graphite particles with a larger particle size are used. The appropriate difference in particle size distribution between the two graphite material layers mitigates battery polarization and enhances battery kinetics, thereby improving the cycling performance of the battery.

In some embodiments, the Dv90 of the first graphite particles is 15 µm-20 µm, and may be, for example, 15 µm, 16 µm, 17 µm, 18 µm, 19 µm, 20 µm, or any point value in a range consisting of two of the above point values. The Dv10 of the first graphite particles is 3 µm-5 µm, and may be, for example, 3 µm, 4 µm, 5 µm, or any point value in a range consisting of two of the above point values.

In some embodiments, the Dv90 of the second graphite particles is 20 µm-30 µm, and may be, for example, 20 µm, 22 µm, 24 µm, 26 µm, 28 µm, 30 µm, or any point value in a range consisting of two of the above point values. The Dv10 of the second graphite particles is 8 µm-15 µm, and may be, for example, 8 µm, 9 µm, 11 µm, 13 µm, 15 µm, or any point value in a range consisting of two of the above point values.

By way of example, the Dv10, Dv50, and Dv90 of the first graphite particles and the Dv10, Dv50, and Dv90 of the second graphite particles all can be measured using a laser particle size analyzer.

In some embodiments, with the ratio of (Dv90-Dv10)/Dv50 in the first graphite particles being P1, and the ratio of (Dv90-Dv10)/Dv50 in the second graphite particles being P2, P1 and P2 satisfy: P1 < P2.

The Dv-series parameters are statistical indicators based on particle volume distribution and are used to quantify the volumetric central tendency and distribution width of particle populations (These parameters can be measured via laser particle size analysis to obtain the statistical plots of the graphite particle volume distribution). Dv10 definition: 10% by volume of the graphite particles have a particle size less than or equal to this value. Dv50 (volume median particle size) definition: 50% by volume of the graphite particles have a particle size less than or equal to this value. Dv90 definition: 90% by volume of the graphite particles have a particle size less than or equal to this value.

The value of (Dv90-Dv10)/Dv50 represents the distribution width ratio of the graphite particles. The larger the value, the broader the distribution, and the more the particles with a large particle size. By adjusting P1 < P2, the graphite particles with a smaller particle size are used in the upper layer of the negative electrode plate, which can improve the fast-charging performance of the negative electrode plate and reduce the lithium plating on the negative electrode; and the graphite particles with a larger particle size are used in the lower layer of the negative electrode plate, so that the negative electrode plate has a greater compacted density, thereby improving the energy density of the battery; moreover, the negative electrode plate has a good porosity and ionic conductivity, facilitating lithium diffusion.

In some embodiments, the ratio P1 of (Dv90-Dv10)/Dv50 in the first graphite particles satisfies: 0.6 ≤ P1 ≤ 3.5, and may be, for example, 0.6, 1.0, 1.5, 2, 2.5, 3, 3.5, or any point value in a range consisting of two of the above point values.

In some embodiments, the ratio P2 of (Dv90-Dv10)/Dv50 in the second graphite particles satisfies: 0.2 ≤ P2 ≤ 2.2, and may be, for example, 0.2, 0.5, 0.8, 1.0, 1.2, 1.5, 1.8, 2.0, 2.2, or any point value in a range consisting of two of the above point values.

In some embodiments, the thickness ratio of the first negative electrode active material layer to the second negative electrode active material layer is 1:9 - 5:5, and the thickness ratio may be, for example, 1 : 9, 2 : 8, 3 : 7, 4 : 6, 5 : 5, or any point value in a range consisting of two of the above point values. The present invention further defines the thickness ratio of the first negative electrode active material layer to the second negative electrode active material layer within the range mentioned above. This can prevent the first negative electrode active material layer from being excessively thick, which would otherwise lead to lower energy density of the battery and deteriorate the high-temperature performance of the battery. This also avoids excessive thickness of the second negative electrode active material layer, which would otherwise lead to reduced kinetics and poor cycling performance of the battery.

In some embodiments, the thickness of the first negative electrode active material layer is 20 µm-60 µm, and may be, for example, 20 µm, 30 µm, 40 µm, 50 µm, 60 µm, or any point value in a range consisting of two of the above point values.

In some embodiments, the thickness of the second negative electrode active material layer is 40 µm-120 µm, and may be, for example, 40 µm, 60 µm, 80 µm, 100 µm, 120 µm, or any point value in a range consisting of two of the above point values.

In some embodiments, the first negative electrode active material layer and the second negative electrode active material layer may further each independently include at least one of silicon, silicon monoxide, hard carbon, or soft carbon.

In some embodiments, the negative electrode active material layer includes a graphite material (including first graphite particles and second graphite particles), a negative electrode binder, and a negative electrode conductive agent. In the present invention, the types of the negative electrode binder and the negative electrode conductive agent are not specifically limited, and any negative electrode binders and negative electrode conductive agents commonly used in the industry shall fall within the scope of protection of the present invention. By way of example, the types of the negative electrode binder include, but are not limited to, one or more of styrene-butadiene rubber, styrene-acrylic emulsion, polyacrylic acids, sodium carboxymethylcellulose or lithium carboxymethylcellulose, preferably sodium carboxymethylcellulose and styrene-butadiene rubber. By way of example, the types of the negative electrode conductive agent include, but are not limited to, one or more of carbon black, graphene, graphite, carbon nanotubes or carbon nanofibers, preferably carbon black.

In some embodiments, the negative electrode current collector includes at least one of a copper foil or a composite copper foil.

In some embodiments, the lithium-ion battery further includes an electrolyte, where the electrolyte includes an additive; the additive includes at least one of a silicon-containing additive, a sulfate additive, or a lithium salt additive; and the mass percentage of the additive is 0.01%-5%, based on the total mass of the electrolyte.

In some embodiments, the electrolyte includes a silicon-containing additive, and based on the total mass of the electrolyte, the mass percentage of the silicon-containing additive is 0.01%-2%, and may be, for example, 0.01%, 0.1%, 0.2%, 0.5%, 0.8%, 1.0%, 1.2%, 1.5%, 1.8%, 2%, or any point value in a range consisting of two of the above point values. The silicon-containing additive includes at least one of hexamethyldisilazane (HMDS), heptamethyldisilazane, tris(trimethylsilyl)phosphate (TMSP), tris(trimethylsilyl)borate (TMSB), ethylhexamethyldisilazane, or hexamethyldisiloxane. The addition of the silicon-containing additive to the electrolyte can improve the stability of the SEI film and optimize the solvation structure, which helps to improve the cycling stability of the negative electrode, thereby improving the cycling performance of the battery.

In some embodiments, the electrolyte includes a sulfate additive, and based on the total mass of the electrolyte, the mass percentage of the sulfate additive is 0.01%-4%, and may be, for example, 0.01%, 0.1%, 0.2%, 0.5%, 0.8%, 1.0%, 1.2%, 1.5%, 1.8%, 2%, 2.5%, 3%, 3.5%, 4%, or any point value in a range consisting of two of the above point values. The sulfate additive includes at least one of ethylene sulfate (DTD), diethyl sulfite (DES), lithium methyl sulfate, 1,3-propanediol sulfate, or pentaerythritol disulfate.

In some embodiments, the electrolyte includes a lithium salt additive, and based on the total mass of the electrolyte, the mass percentage of the lithium salt additive is 0.01%-2%, and may be, for example, 0.01%, 0.1%, 0.2%, 0.5%, 0.8%, 1.0%, 1.2%, 1.5%, 1.8%, 2%, or any point value in a range consisting of two of the above point values. The lithium salt additive includes at least one of lithium bisoxalate borate (LiBOB), lithium tetrafluoroborate (LiBF₄), lithium difluoro(bisoxalato)phosphate (LiODFP), lithium difluoro(oxalato)borate (LiODFB), or lithium tetrafluorooxalatophosphate (LiTFOP). When these types of lithium salt additives above are added to the electrolyte, the resulting inorganic SEI film is stable, which can effectively reduce the occurrence of side reactions while maintaining a high ionic conductivity, thereby improving the cycling performance and fast-charging performance of the battery.

In some embodiments, the electrolyte further includes an organic solvent. The organic solvent includes short-chain carbonates (carbonates with less than 10 carbon atoms), where the short-chain carbonate includes one or more of ethylene carbonate (EC), propylene carbonate (PC), ethyl methyl carbonate (EMC), or dimethyl carbonate (DMC). Selecting a short-chain carbonate as an organic solvent can reduce the electrolyte viscosity and solvation energy, increase the conductivity and ion migration rate, and thus improve the fast-charging performance of the battery.

In some embodiments, the electrolyte further includes a lithium salt, and the lithium salt is one or a combination of lithium hexafluorophosphate and lithium bis(fluorosulfonyl)imide.

In the present invention, the material of the separator is not specifically limited, and all separator materials commonly used in the industry for secondary batteries shall fall within the scope of protection of the present invention. By way of example, the material of the separator includes, but is not limited to, at least one of polyethylene, polypropylene, polyvinylidene fluoride, aramid, polyethylene terephthalate, polytetrafluoroethylene, polyacrylonitrile, polyimide, polyamide, polyester or natural fiber.

The lithium-ion battery of the present invention is assembled from a positive electrode plate, a separator, a negative electrode plate, and an electrolyte. For example, the positive electrode plate, negative electrode plate and separator are assembled into a cell by means of winding or stacking as is common in the industry, which is then packaged in an aluminum-laminated film, followed by baking, electrolyte injection, formation, and secondary packaging to obtain a lithium-ion battery.

The technical solutions of the embodiments of the present invention will be clearly and completely described combined with the embodiments of the present invention as below, clearly, the embodiments described are merely a part of the embodiments of the present invention rather than all of the embodiments of the present invention. Based on the examples in the present invention, all other examples obtained by those of ordinary skill in the art without involving creative effort belong to the scope of protection of the present invention.

The materials, reagents, etc. used in the following examples are all commercially available, unless otherwise specified.

The present invention will be described below in detail combined with specific examples, which are intended to understand but not to limit the present invention.

### Preparation example 1 Preparation of lithium iron phosphate material

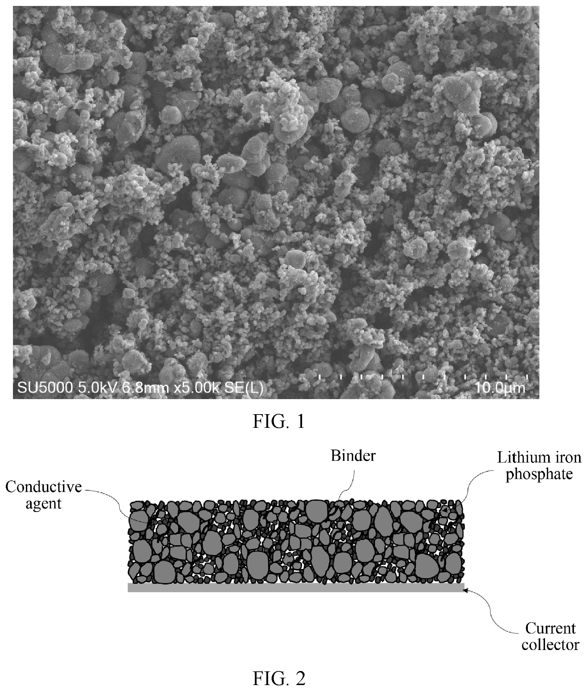

(1) In percentage by mass, 73-74% of iron phosphate was added to 8-9% of glucose as an organic carbon source, 1-2% of PEG6000, 15-16% of lithium carbonate, 1-2% of a dopant, 1-2% of citric acid as a dispersant, and ultrapure water, followed by mixing and milling. A TiO₂ powder was used as the dopant when the mixture was milled into small particles (50-500 nm); and ammonium metavanadate and vanadium oxide were used as the dopant when the mixture was milled into large particles (500-5000 nm).
(2) The prepared mixtures were separately milled, using 0.2 mm and 0.3 mm zirconia beads, respectively; the milled slurries were spray-dried, respectively, to obtain spray-dried materials with a moisture content of less than 3%; the spray-dried material with a particle size of 50-500 nm was placed in a roller kiln and sintered in the roller kiln under a nitrogen-filled reducing atmosphere for 20 h, where the temperature in the calcination soaking zone was 720-740°C; the spray-dried material with a particle size of 500-5000 nm was placed in a roller kiln and sintered in the roller kiln under a nitrogen-filled reducing atmosphere for 22 h, where the temperature in the calcination soaking zone was 780-810°C; the sintered materials were jet-milled, respectively, to obtain the pulverized materials; and the two pulverized materials were mixed and loaded into a saggar for secondary sintering, with the small and large particles mixed at a weight ratio of 1 : 9.
(3) 5-7 kg of the mixed material was weighed, placed into a refractory graphite saggar and sintered in the roller kiln under a nitrogen-filled reducing atmosphere for 20 h, with an oxygen content < 20 ppm, where the temperature in the calcination soaking zone was 750-780°C; the mixed and sintered material was jet-milled; and the pulverized material was sieved, subjected to iron removal, and packaged to obtain high-compacted, fast-charging lithium iron phosphate, where during jet-milling, the dew point in the milling chamber was controlled to -60°C; and the packaging was carried out in a temperature-constant, low-humidity room at 25°C with a relative humidity of 15% RH or less, using vacuum packaging to maintain the moisture content of the finished product at 1000 ppm or less.
(4) In the prepared lithium iron phosphate particles, based on the number of the particles, the lithium iron phosphate particles with a particle size in the range of 50-500 nm accounted for 87.78%; the lithium iron phosphate particles with a particle size of 500-5000 nm (first lithium iron phosphate particles) accounted for 12.22%; and particularly, the percentage by number of the lithium iron phosphate particles with a particle size of 1-5 µm (second lithium iron phosphate particles) was 1.88%; thus, particle-size-graded lithium iron phosphate with a Dn50 of 0.35 µm, a (Dn90-Dn10)/Dn50 of 0.98, and a large-to-small particle mass ratio of 9 : 1 was obtained. The doping amount of the V element of the large particles (500-5000 nm) was 4600 ppm; and the doping amount of the Ti element of the small particles (50-500 nm) was 1200 ppm. The SEM image showing the morphology of this lithium iron phosphate material is shown in FIG. 1. The resulting lithium iron phosphate had a powder compacted density of 2.62 g/cm³.

### Example 1

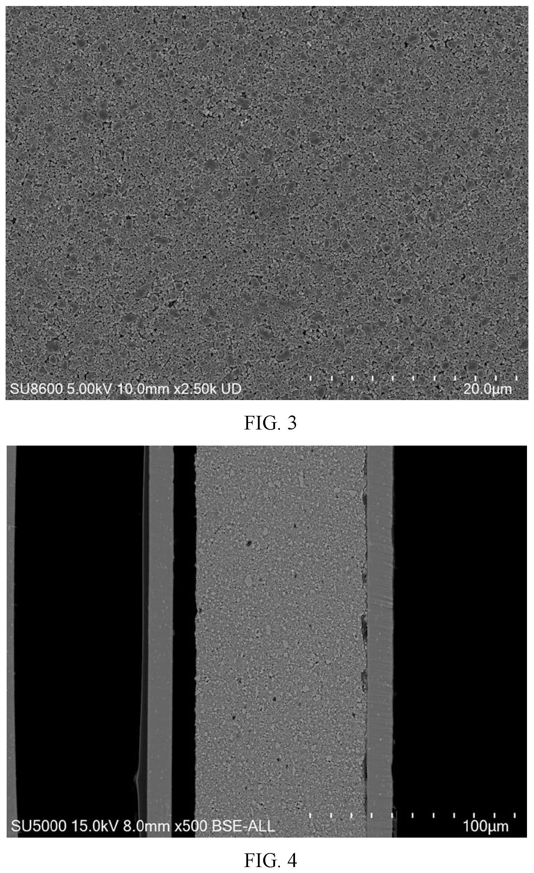

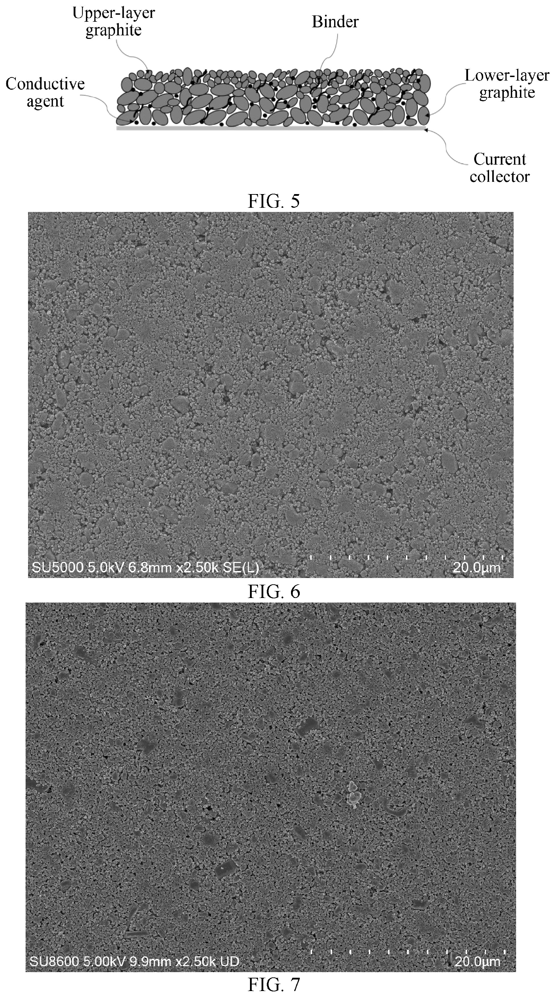

(1) Preparation of positive electrode plate:
   The lithium iron phosphate material obtained in the preparation example 1 above as an active material of the positive electrode, carbon black and carbon nanotubes (with a mass ratio of 1 : 1) as a conductive agent, polyvinylidene fluoride (PVDF) as a binder, and N-methylpyrrolidone (NMP) as a solvent were stirred and mixed in a homogenizer in a specific sequence until uniform; and the resulting slurry was uniformly coated onto a carbon-coated aluminum foil current collector using a coater, followed by rolling using a roller press to obtain a positive electrode plate. Based on the total mass of the lithium iron phosphate positive electrode coating, the positive electrode plate contained 96.5% of the lithium iron phosphate particles, 1.5% of the conductive agent, and 2% of the binder.
   The schematic diagram of the resulting positive electrode plate is shown in FIG. 2. The prepared positive electrode plate had a compacted density of 2.657 g/cm³ and a single-sided areal density of 190 g/m². The SEM image of the surface of the resulting positive electrode plate is shown in FIG. 3, and the SEM micrograph of the plasma-cut cross-section thereof is shown in FIG. 4. It can be seen that the positive electrode plate exhibited a uniform morphology with intact particles.
(2) Preparation of negative electrode plate:
   Artificial graphite with different particle sizes as a negative electrode material of the negative electrode, conductive carbon black as a conductive agent, sodium carboxymethyl cellulose (CMC) and polyacrylic acid as binders, and deionized water as a solvent were mixed until uniform, and then coated onto the surface of a copper foil current collector in layers. The active material of the upper layer (away from the current collector) was small-sized graphite (first graphite particles), with a particle size Dv50 of about 8 µm, a Dv90 of about 17 µm, and a Dv10 of about 5 µm; and the active material of the lower layer (close to the current collector) was large-sized graphite (second graphite particles), with a particle size Dv50 of about 12 µm, a Dv90 of about 28 µm, and a Dv10 of about 9 µm. The thickness ratio of the upper layer to the lower layers was 2 : 8 (the total thickness of the negative electrode active material layers was about 100 µm). The schematic diagram of the dual-layer coating of the negative electrode is shown in FIG. 5.
(3) Preparation of stacked lithium-ion battery:
   The positive and negative electrode plates were die-cut into the designed shapes; the positive electrode plate, a separator, and the negative electrode plate were then alternately stacked using a Z-folding stacking method; the tabs of the cell were ultrasonically welded, where the positive electrode was welded to an aluminum tab, and the negative electrode was welded to a copper tab; and then the stacked cell was then placed into a housing stamped from aluminum-laminated film and sealed within the housing by heating. The electrolyte included a mixed lithium salt system of LiPF₆ and LiTFSi (6.88% of LiPF₆ and 8.41% of LiFSI), EC, DMC, EMC and additives, where the volume ratio of EC : DMC : EMC was 3 : 3 : 4; and the additives included 0.5% of a Si-containing additive (TMSP), 1% of a sulfate additive (DTD), and 0.5% of LiBOB (the percentages of the above components were all mass percentages based on the electrolyte). A separator including a PE base film + an alumina ceramic layer + a PVDF adhesive, with a total thickness of 11 µm (7 + 2 + 1 + 1), was used to prepare a stacked lithium-ion battery. The formation process was conducted using a charging cabinet from LAND, where the battery was activated at 0.2C, then charged at 0.33C under a constant current-constant voltage mode to 3.8 V, and then discharged at 0.33C to 2.0 V.

### Test examples

(1) The morphology and powder compacted density of the prepared lithium iron phosphate material were determined. The morphology was observed and characterized using scanning electron microscopy (SEM). The method for determining the powder compacted density included: using a SUNS powder compacted density tester, under a pressure of 3 T.
(2) The morphology and compacted density of the coated and rolled positive electrode plate were determined. The morphology of the positive electrode plate was observed and characterized using scanning electron microscopy (SEM). The compacted density was measured by punching disc samples and calculating from the weight.
(3) After activating the battery using a LAND charge-discharge cabinet, rate charge/discharge tests were carried out, involving discharging at a constant current of 0.33C and charging at 4C to 3.8 V using a constant current-constant voltage mode.
(4) The capacity of the battery was measured, followed by storage in a high-temperature environment at 45°C. The battery was removed and the capacity thereof was tested every 30D, and the capacity retention rate during the 365D high-temperature storage at 45°C was recorded.
(5) The battery was charged at a high rate of 4.5C. After cycling 20T, the battery was disassembled to observe the occurrence of lithium plating on the surface of the negative electrode. The evaluation criteria for lithium plating on the surface of the negative electrode plate were as follows: 1) no lithium plating: no white metallic lithium deposition was observed on the surface; 2) slight lithium plating: lithium plating was observed at the top, bottom, or creases. 3) severe lithium plating: lithium plating was observed on the entire surface.
(6) A specific stepped charging protocol was adopted to charge the battery to 3.8 V, followed by constant-current discharge at 0.33C/0.5C to 2.0 V, and the capacity retention rate after 1000 cycles was recorded.

The example groups 2 and 3 and Comparative examples 1-6 were conducted with reference to Example 1. The main differences are shown in Table 1. In example group 2 and Comparative examples 1 and 2, the percentage by number of the first lithium iron phosphate particles and the second lithium iron phosphate particles were adjusted (where the SEM morphology of the positive electrode plate in Example 2c is shown in FIG. 6, and the SEM morphology of the positive electrode plate in Example 2d is shown in FIG. 7). In example group 3, the Dv50 of the first graphite particles and the Dv50 of the second graphite particles were adjusted. In Comparative example 3, lithium iron phosphate with a uniform particle size (with a particle size of 3-500 nm) was used. In Comparative example 4, the negative electrode plate was coated with a single layer, using only the first graphite particles. In Comparative example 5, the negative electrode plate was coated with a single layer, using only the second graphite particles. In Comparative example 6, for the dual-layer coating of the negative electrode, the second graphite particles were used in the upper layer and the first graphite particles were used in the lower layer.

**Table 1**

| Group | Percentage by number of first lithium iron phosphate particles | Percentage by number of second lithium iron phosphate particles | Percentage by number of lithium iron phosphate particles with particle size of 1-5 µm | (Dn90-Dn10)/Dn 50 of lithium iron phosphate | Dn50 of lithium iron phosphat e material | Dv50 of first graphite particles | Dv50 of second graphite particles |
|---|---|---|---|---|---|---|---|
| Example 1 | 87.78% | 12.22% | 1.88% | 0.98 | 350 | 8.0 | 12.0 |
| Example 2a | 84.95% | 16.05% | 2.00% | 0.93 | 361 | 8.0 | 12.0 |
| Example 2b | 82.59% | 17.41% | 2.30% | 1.01 | 365 | 8.0 | 12.0 |
| Example 2c | 85.25% | 14.75% | 3.48% | 1.2 | 380 | 8.0 | 12.0 |
| Example 2d | 76.57% | 23.43% | 3.14% | 1.02 | 385 | 8.0 | 12.0 |
| Example 2e | 92.34% | 7.66% | 4.15% | 1.23 | 336 | 8.0 | 12.0 |
| Example 3a | 87.78% | 12.22% | 1.88% | 0.98 | 350 | 14.0 | 18.0 |
| Example 3b | 87.78% | 12.22% | 1.88% | 0.98 | 350 | 8.0 | 23.0 |
| Example 3c | 87.78% | 12.22% | 1.88% | 0.98 | 350 | 3.0 | 8.0 |
| Example 3d | 87.78% | 12.22% | 1.88% | 0.98 | 350 | 18.0 | 27.0 |
| Comparative example 1 | 65.35% | 34.65% | 5.60% | 1.23 | 370 | 8.0 | 12.0 |
| Comparative example 2 | 96.16% | 3.84% | 0.80% | 0.92 | 322 | 8.0 | 12.0 |
| Comparative example 3 | / | / | / | 1.06 | 380 | 8.0 | 12.0 |
| Comparative example 4 | 87.78% | 12.22% | 1.88% | 0.98 | 350 | 8.0 | / |
| Comparative example 5 | 87.78% | 12.22% | 1.88% | 0.98 | 350 | / | 12.0 |
| Comparative example 6 | 87.78% | 12.22% | 1.88% | 0.98 | 350 | 12.0 | 8.0 |

| | | | | | | | |
|---|---|---|---|---|---|---|---|
| Notes: "/" indicates that the corresponding parameter is not tested, or that the corresponding component is not included. | | | | | | | |

The test data of example groups 2 and 3 and Comparative examples 1-6 are shown in Table 2.

**Table 2**

| Group | Compacted density of positive electrode plate g/cm³ | 4C constant-current charge ratio % | Disassembly after charging at 4.5C rate | Capacity retention rate after 365D high-temperature storage at 45°C | Cycling performance under 1000T stepped charging % |
|---|---|---|---|---|---|
| Example 1 | 2.657 | 98.82% | No lithium plating | 92.56% | 95.06% |
| Example 2a | 2.754 | 98.67% | No lithium plating | 92.58% | 95.38% |
| Example 2b | 2.857 | 98.62% | No lithium plating | 92.66% | 96.04% |
| Example 2c | 2.650 | 94.00% | Slight lithium plating | 93.83% | 96.53% |
| Example 2d | 2.657 | 92.00% | Slight lithium plating | 94.13% | 95.47% |
| Example 2e | 2.650 | 98.89% | Slight lithium plating | 93.55% | 94.24% |
| Example 3a | 2.650 | 97.76% | No lithium plating | 93.86% | 95.23% |
| Example 3b | 2.650 | 98.67% | No lithium plating | 93.22% | 95.43% |
| Example 3c | 2.650 | 99.04% | No lithium plating | 90.11% | 92.51% |
| Example 3d | 2.650 | 94.57% | Severe lithium plating | 94.21% | Sudden drop |
| Comparative example 1 | 2.650 | 91.88% | Slight lithium plating | 94.88% | 93.10% |
| Comparative example 2 | 2.620 | 99.15% | No lithium plating | 89.68% | 94.00% |
| Comparative example 3 | 2.680 | 90.23% | Severe lithium plating | 95.13% | 92.08% |
| Comparative example 4 | 2.650 | 99.12% | No lithium plating | 90.01% | 92.0% |
| Comparative example 5 | 2.650 | 87.44% | Severe lithium plating | 94.23% | Sudden drop |
| Comparative example 6 | 2.650 | 87.89% | Severe lithium plating | 92.60% | Sudden drop |

As can be seen from Table 2, in the battery of the present invention, the positive electrode plate incorporates a blend of small and large lithium iron phosphate particles with different particle sizes, and the positive electrode plate has a higher compacted density; and the negative electrode plate features a dual-layer coating design, where the first graphite particles with a small particle size are used in the upper layer, and the second graphite particles with a large particle size are used in the lower layer. The combination of the positive electrode plate and the dual-layer coated negative electrode plate can significantly enhance the fast-charging capability, rate performance, and high-temperature cycling and storage performance of the battery.

Example group 4 was conducted with reference to Example 1, except that the content of the doped Ti element in the first lithium iron phosphate particles and the content of the doped V element in the second lithium iron phosphate particles were adjusted. The specific differences are shown in Table 3.

**Table 3**

| Example | Content of doped Ti element ppm | Content of doped V element ppm | Compacted density of electrode plate g/cm³ | 4C constant-current charge ratio % | Disassembly after charging at 4.5C rate | Capacity retention rate after 365D high-temperature storage at 45°C | 1000T cycling performance % |
|---|---|---|---|---|---|---|---|
| Example 1 | 1200 | 4600 | 2.657 | 98.82% | No lithium plating | 92.56% | 95.06% |
| Example 4a | 2500 | 4800 | 2.65 | 98.95 | No lithium plating | 92.55% | 95.10% |
| Example 4b | 200 | 500 | 2.65 | 97.04 | No lithium plating | 92.55% | 94.98% |
| Example 4c | 0 | 0 | 2.65 | 94.58 | Slight lithium plating | 92.60% | 93.88% |
| Example 4d | 4000 | 6000 | 2.62 | 98.88 | No lithium plating | 91.86% | 94.02% |

As can be seen from Table 3, in the present invention, when the first lithium iron phosphate particles are doped with the Ti element, the second lithium iron phosphate particles are doped with the V element, and the Ti element and V element are adjusted within the scope of protection of the present invention, it can achieve a superior balance between the fast-charging performance and the high-temperature cycling and storage performance of the battery.

Example group 5 was conducted with reference to Example 1, except that Dv90 and Dv10 of the first graphite particles and Dv90 and Dv10 of the second graphite particles were adjusted. The specific differences are shown in Table 4.

**Table 4**

| Example | Dv90 of first graphite particles / µm | Dv10 of first graphite particles / µm | Difference A between Dv90 and Dv10 of first graphite particles | Dv90 of second graphite particles / µm | Dv10 of second graphite particles / µm | Difference B between Dv90 and Dv10 of second graphite particles | A<B or not |
|---|---|---|---|---|---|---|---|
| Example 1 | 17 | 5 | 12 | 28 | 9 | 19 | Yes |
| Example 5a | 16 | 5 | 11 | 30 | 8 | 22 | Yes |
| Example 5b | 20 | 3 | 17 | 28 | 10 | 18 | Yes |
| Example 5c | 18 | 4 | 14 | 22 | 12 | 10 | No |

The test results of example group 5 are shown in Table 5.

**Table 5**

| Example | 4C constant-current charge ratio % | Disassembly after charging at 4.5C rate | Capacity retention rate after 365D high-temperature storage at 45°C | 1000T cycling performance % |
|---|---|---|---|---|
| Example 1 | 98.82% | No lithium plating | 92.56% | 95.06% |
| Example 5a | 98.9% | No lithium plating | 92.7% | 95.0% |
| Example 5b | 98.7% | No lithium plating | 92.8% | 95.0% |
| Example 5c | 96.0% | No lithium plating | 92.4% | 94.0% |

As can be seen from Table 5, in the present invention, adjusting the difference A between Dv90 and Dv10 of the first graphite particles in the upper layer of the negative electrode plate to be less than the difference B between Dv90 and Dv10 of the second graphite particles in the lower layer of the negative electrode plate can improve the kinetics of the battery, thereby improving the cycling performance of the battery.

Example group 6 was conducted with reference to Example 1, except that Dv90, Dv50 and Dv10 of the first graphite particles and Dv90, Dv50, and Dv10 of the second graphite particles were adjusted to vary the ratios P1 and P2 of (Dv90-Dv10)/Dv50. The specific differences are shown in Table 6.

**Table 6**

| Example | Dv90 of first graphite particles / µm | Dv10 of first graphite particles / µm | Dv50 of first Graphite particles / µm | P1 | Dv90 of second graphite particles / µm | Dv10 of second graphite particles / µm | Dv50 of second graphite particles / µm | P2 | P1 < P2 or not |
|---|---|---|---|---|---|---|---|---|---|
| Example 1 | 17 | 5 | 8 | 1.5 | 28 | 9 | 12 | 1.58 | Yes |
| Example 6a | 16 | 3 | 12 | 1.08 | 28 | 10 | 15 | 1.20 | Yes |
| Example 6b | 18 | 4 | 10 | 1.4 | 25 | 8 | 12 | 1.42 | Yes |
| Example 6c | 18 | 4 | 10 | 1.4 | 25 | 12 | 16 | 0.81 | No |

The test results of example group 6 are shown in Table 7.

**Table 7**

| Example | 4C constant-current charge ratio % | Disassembly after charging at 4.5C rate | Capacity retention rate after 365D high-temperature storage at 45°C | 1000T cycling performance % |
|---|---|---|---|---|
| Example 1 | 98.82% | No lithium plating | 92.56% | 95.06% |
| Example 6a | 98.4% | No lithium plating | 92.7% | 95.1% |
| Example 6b | 98.4% | No lithium plating | 92.7% | 95.0% |
| Example 6c | 96.5% | No lithium plating | 93.0% | 94.3% |

As can be seen from Table 7, in the present invention, adjusting the values of (Dv90-Dv10)/Dv50 to be P1 < P2 can improve the fast-charging performance of the negative electrode plate and reduce lithium plating on the negative electrode, thereby improving the cycling performance of the battery.

Example group 7 was conducted with reference to Example 1. The main differences are shown in Table 8. In example group 7, the ratio of the thickness of the first negative electrode active material layer to the thickness of the second negative electrode active material layer was changed.

**Table 8**

| Example | Thickness of first negative electrode active material layer / µm | Thickness of second negative electrode active material layer / µm | Thickness ratio | 4C constant-current charge ratio % | Disassembly after charging at 4.5C rate | Capacity retention rate after 365D high-temperature storage at 45°C | 1000T cycling performance % |
|---|---|---|---|---|---|---|---|
| Example 1 | 20 | 80 | 2:8 | 98.82% | No lithium plating | 92.56% | 95.06% |
| Example 7a | 50 | 50 | 5 : 5 | 99.13% | No lithium plating | 91.88% | 94.88% |
| Example 7b | 40 | 60 | 4 : 6 | 98.94% | No lithium plating | 92.02% | 94.98% |
| Example 7c | 60 | 40 | 6:4 | 99.24% | No lithium plating | 91% | 94.56% |
| Example 7d | 5 | 95 | 0.5 : 9.5 | 93.46% | Severe lithium plating | 93.44% | Sudden drop |

As can be seen from the data in Table 8, in the present invention, by controlling the thickness ratio of the first negative electrode active material layer to the second negative electrode active material layer within the scope of protection of the present invention, the lithium plating on the negative electrode can be reduced, and the high-temperature cycling performance of the battery can be improved.

It should be noted that, as used herein, terms "include", "include", or any other variants thereof are intended to encompass a non-exclusive inclusion such that a process, method, article, or device which includes a series of elements not only includes those elements, but may also include other elements not expressly listed, or also include elements inherent to this process, method, article, or device. Without being subject to further limitations, an element defined by a phrase "including ..." does not exclude presence of other identical elements in the process, method, article, or device which includes the element. Furthermore, it should be noted that the scopes of the methods and devices in the embodiments of the present application are not limited to performing functions in the order shown or discussed, but may also include performing functions in a substantially simultaneous manner or in a reverse order depending on the functions involved. For example, the described method may be performed in an order different from that described, and various steps may be added, omitted, or combined. Additionally, features described with reference to some examples may be combined in other examples.

The above descriptions are merely preferred embodiments of the present invention but not intended to limit the present invention, and any modifications, equivalent replacements, etc. made within the spirit and principle of the present invention should be included within the scope of protection of the present invention.

## Claims

1. A lithium-ion battery, **characterized in that** the battery comprises a positive electrode plate and a negative electrode plate;
the positive electrode plate comprises a positive electrode current collector, and a positive electrode active material layer provided on a surface on at least one side of the positive electrode current collector; the positive electrode active material layer comprises a lithium iron phosphate material; the lithium iron phosphate material comprises first lithium iron phosphate particles and second lithium iron phosphate particles; the first lithium iron phosphate particles have a particle size of 50 nm-500 nm; and the second lithium iron phosphate particles have a particle size of 500 nm-5000 nm;
in the positive electrode active material layer, the percentage by number of the first lithium iron phosphate particles is 70%-95%, and the percentage by number of the second lithium iron phosphate particles is 5%-30%;
the negative electrode plate comprises a negative electrode current collector, and a negative electrode active material layer provided on a surface on at least one side of the negative electrode current collector; the negative electrode active material layer comprises a first negative electrode active material layer and a second negative electrode active material layer, and the second negative electrode active material layer is provided between the negative electrode current collector and the first negative electrode active material layer; the first negative electrode active material layer comprises first graphite particles, and the second negative electrode active material layer comprises second graphite particles; and
the Dv50 of the first graphite particles < the Dv50 of the second graphite particles.

2. The lithium-ion battery according to claim 1, **characterized in that** the percentage by number of the lithium iron phosphate particles with a particle size of 1000 nm-5000 nm is < 3%, preferably 1.2%-3%.

3. The lithium-ion battery according to claim 1 or 2, **characterized in that** the lithium iron phosphate material has a particle size satisfying: 0.9 ≤ (Dn90-Dn10)/Dn50 ≤ 1.2;
and/or the lithium iron phosphate material has a Dn50 of 300 nm-400 nm.

4. The lithium-ion battery according to any one of claims 1 to 3, **characterized in that** the lithium iron phosphate material is doped with one or more of Ti, V, Mg, or Al elements;
preferably, the first lithium iron phosphate particles are doped with the Ti element, and a content of the Ti element is 0 ppm-3000 ppm, more preferably 500 ppm-2800 ppm; and
preferably, the second lithium iron phosphate particles are doped with the V element, and a content of the V element is ≤ 5000 ppm, more preferably 3000 ppm-5000 ppm.

5. The lithium-ion battery according to any one of claims 1 to 4, **characterized in that** the lithium iron phosphate material or the positive electrode plate satisfies at least one of the following conditions:
(a) the lithium iron phosphate material has a powder compacted density of 2.6 g/cm³-2.9 g/cm³;
(b) the lithium iron phosphate material has a powder resistivity of 5 Q.cm-10 Ω.cm;
(c) in the lithium iron phosphate material, the content of impurities is < 150 ppm, and the content of magnetic substances is < 1 ppm;
(d) the positive electrode plate has a compacted density of ≥ 2.75 g/cc; or
(e) the positive electrode plate has an area resistance of 5 Ω.cm²-15 Ω.cm².

6. The lithium-ion battery according to any one of claims 1 to 5, **characterized in that** the Dv50 of the first graphite particles is 5 µm-15 µm;
and/or the Dv50 of the second graphite particles is 10 µm-30 µm.

7. The lithium-ion battery according to any one of claims 1 to 6, **characterized in that** with the difference between a Dv90 and Dv10 of the first graphite particles being denoted as A, and the difference between a Dv90 and Dv10 of the second graphite particles being denoted as B, A and B satisfy: A < B.

8. The lithium-ion battery according to any one of claims 1 to 7, **characterized in that** the Dv90 of the first graphite particles is 15 µm-20 µm, and the Dv10 thereof is 3 µm-5 µm; and/or
the Dv90 of the second graphite particles is 20 µm-30 µm, and the Dv10 thereof is 8 µm-15 µm.

9. The lithium-ion battery according to any one of claims 1 to 8, **characterized in that** with a ratio of (Dv90-Dv10)/Dv50 in the first graphite particles being P1, and a ratio of (Dv90-Dv10)/Dv50 in the second graphite particles being P2, P1 and P2 satisfy: P1 < P2;
preferably, P1 satisfies: 0.6 ≤ P1 ≤ 3.5; and/or P2 satisfies: 0.2 ≤ P2 ≤ 2.2.

10. The lithium-ion battery according to any one of claims 1 to 9, **characterized in that** a thickness ratio of the first negative electrode active material layer to the second negative electrode active material layer is 1:9 - 5:5; and
preferably, a thickness of the first negative electrode active material layer is 20 µm-60 µm; and
preferably, a thickness of the second negative electrode active material layer is 40 µm-120 µm.

11. The lithium-ion battery according to any one of claims 1 to 10, **characterized in that** the first negative electrode active material layer comprises at least one of silicon, silicon monoxide, hard carbon, or soft carbon; and/or,
the second negative electrode active material layer comprises at least one of silicon, silicon monoxide, hard carbon, or soft carbon.

12. The lithium-ion battery according to any one of claims 1 to 11, **characterized in that** the first negative electrode active material layer and the second negative electrode active material layer each independently comprise a negative electrode binder and a negative electrode conductive agent,
preferably, the negative electrode binder comprises one or more of styrene-butadiene rubber, styrene-acrylic emulsion, polyacrylic acids, sodium carboxymethylcellulose or lithium carboxymethylcellulose,
preferably, the negative electrode conductive agent comprises one or more of carbon black, graphene, graphite, carbon nanotubes or carbon nanofibers.

13. The lithium-ion battery according to any one of claims 1 to 12, **characterized in that** the battery comprises an electrolyte, wherein the electrolyte comprises an additive; the additive comprises at least one of a silicon-containing additive, a sulfate additive, or a lithium salt additive; and a mass percentage of the additive is 0.01%-5%, based on the total mass of the electrolyte;
preferably, a mass percentage of the silicon-containing additive is 0.01%-2%, based on the total mass of the electrolyte;
preferably, a mass percentage of the sulfate additive is 0.01%-4%, based on the total mass of the electrolyte;
preferably, a mass percentage of the lithium salt additive is 0.01%-2%, based on the total mass of the electrolyte.

14. The lithium-ion battery according to claim 13, **characterized in that** the silicon-containing additive comprises at least one of hexamethyldisilazane (HMDS), heptamethyldisilazane, tris(trimethylsilyl)phosphate (TMSP), tris(trimethylsilyl)borate (TMSB), ethylhexamethyldisilazane, or hexamethyldisiloxane; and/or
the sulfate additive comprises at least one of ethylene sulfate (DTD), diethyl sulfite (DES), lithium methyl sulfate, 1,3-propanediol sulfate, or pentaerythritol disulfate; and/or
the lithium salt additive comprises at least one of lithium bisoxalate borate (LiBOB), lithium tetrafluoroborate (LiBF₄), lithium difluoro(bisoxalato)phosphate (LiODFP), lithium difluoro(oxalato)borate (LiODFB), or lithium tetrafluorooxalatophosphate (LiTFOP).

15. The lithium-ion battery according to claim 13 or 14, **characterized in that** the electrolyte further comprises an organic solvent and/or a lithium salt;
preferably, the organic solvent comprises one or more of ethylene carbonate (EC), propylene carbonate (PC), ethyl methyl carbonate (EMC), or dimethyl carbonate (DMC);
preferably, the lithium salt is one or a combination of lithium hexafluorophosphate and lithium bis(fluorosulfonyl)imide.
